Europäisches Patentamt

European Patent Office

Office européen des brevets

(11) Publication number: **0012 618**
A2

## (12) EUROPEAN PATENT APPLICATION

(21) Application number: 79302910.9

(22) Date of filing: 14.12.79

(51) Int. Cl.³: **C 25 B 9/00, C 02 F 1/76**

(30) Priority: 15.12.78 US 969845

(71) Applicant: **Themy, Constantinos Dean,
4984 South 360 West, Murray, Utah 84106 (US)**

(43) Date of publication of application: 25.06.80
**Bulletin 80/13**

(72) Inventor: **Themy, Constantinos Dean,
4984 South 360 West, Murray, Utah 84106 (US)**

(84) Designated Contracting States: **AT BE CH DE FR GB IT
NL SE**

(74) Representative: **Pratt, David Martin et al, Brookes &
Martin High Holborn House 52/54 High Holborn, London.
WC1V 6SE (GB)**

(54) Electrolysis cell.

(57) Known electrolysis cells used for producing chlorine for sanitising and sterilisation purposes deteriorate due to ac-cummulation of scale on the electrodes thereof. This prob-lem is solved by an improved cell (10) comprising an outer electrode (12) having an in-facing surface (14) which defines a first cylindrical surface (16), and an inner, generally coaxial electrode (34) having an out-facing surface (38) which defines a second cylindrical surface (40). The second cylindrical surface (40) lies radially inward of the first cylindrical surface (16). The outer and inner electrodes (12 and 34) are longitudi-nally coextensive for at least a substantial portion thereof. The inner and outer electrodes (12 and 34) are rotable relative to one another. An abrading structure (98) is mounted to one of the electrodes (34) with an abrasive portion (100) thereof in abrasive contact with the other of the electrodes (12). The abrading structure (98) is electrically insulated from at least one of the electrodes. The electrodes (12 and 34) are sup-ported in electrically insulating relation to one another within a cell cavity (36).

ACTORUM AG

-1-

## ELECTROLYSIS CELL

This invention relates to an electrolysis cell for generating chlorine, and in some instances ozone, by the electrolysis of a sodium chloride solution. Such an apparatus is particularly useful for the chlorination of swimming pools, drinking water supplies, and the like.

Scale build-up is a serious problem in electrolysis cells, particularly electrolysis cells used for production of chlorine from salt water solutions. U.S. Patent Specification No. 3,282,823 discloses an electrolysis cell which attempts to overcome this problem by providing a pair of coaxial cylindrical electrodes, and by providing a jet action within the cell which causes gravel-laden water to scour the facing surfaces of the coaxial electrodes. Such structures, however, require means for retaining the gravel in the system, as well as requiring a perforated inner cylindrical electrode which results in a reduction of the overall effective electrode area. Moreover, the gravel can cause a direct short between the electrodes thus damaging them. Since complete retention of the gravel in the system is not ensured, it is possible for gravel to escape from the cell to a swimming pool or the like where it could clog filters or pumps, or simply form an unattractive deposit. Furthermore, because of the escape of gravel, disassembly of the cell to replace lost gravel becomes necessary, thus increasing downtime. Still further, the interior of the cell must be relatively complex in structure to ensure the proper flow direction of the gravel suspension. All of this increases the overall complexity and cost of the cell while providing additional potential breakdown problems.

The aim of the invention is to provide a throughflow electrolysis cell which does not have the above disadvantages, but which has a fully adequate structure for abrasion of either the anode or the cathode so as to prevent scale formation. In this respect, it should be mentioned that such scale formation generally does not take place at both the anode and the cathode, but rather only at the cathode where calcium and magnesium tend to deposit as hard water scale. Thus, it is usually only necessary to remove scale from the cathode since the anode will remain generally scale free in any event.

The present invention provides an electrolysis cell comprising an outer electrode having an in-facing surface which defines a first cylindrical surface, an inner coaxial electrode having an out-facing surface which defines a second cylindrical surface, the second cylindrical surface being radially inward of the first cylindrical surface, the outer and inner electrodes being longitudinally co-extensive for at least a substantial portion thereof, means for relatively rotating the inner and outer electrodes, an abrading structure having an abrasive portion, means for mounting the abrading structure to one of the electrodes with the abrasive portion thereof in abrasive contact with the other electrode, means for electrically insulating the abrasive portion from said one electrode, and means for supporting the electrodes in electrically insulating relation relative to one another and for defining a cell cavity surrounding the electrodes.

The invention will now be described in greater detail, by way of example, with reference to the accompanying drawings, in which:-

Figure 1 is a part-sectional side elevation of a first form of electrolysis cell constructed in accordance with the invention;

Figure 2 is a cross-section taken on the line II-II of Figure 1;

- 4 -

Figure 3 shows part of a modified form of electrolysis cell, and is a cross-section taken generally on line which would correspond to the line III-III of Figure 2;

Figure 4 is a side elevation of a part of another modified form of electrolysis cell; and.

Figure 5 is an enlarged view of part of Figure 1.

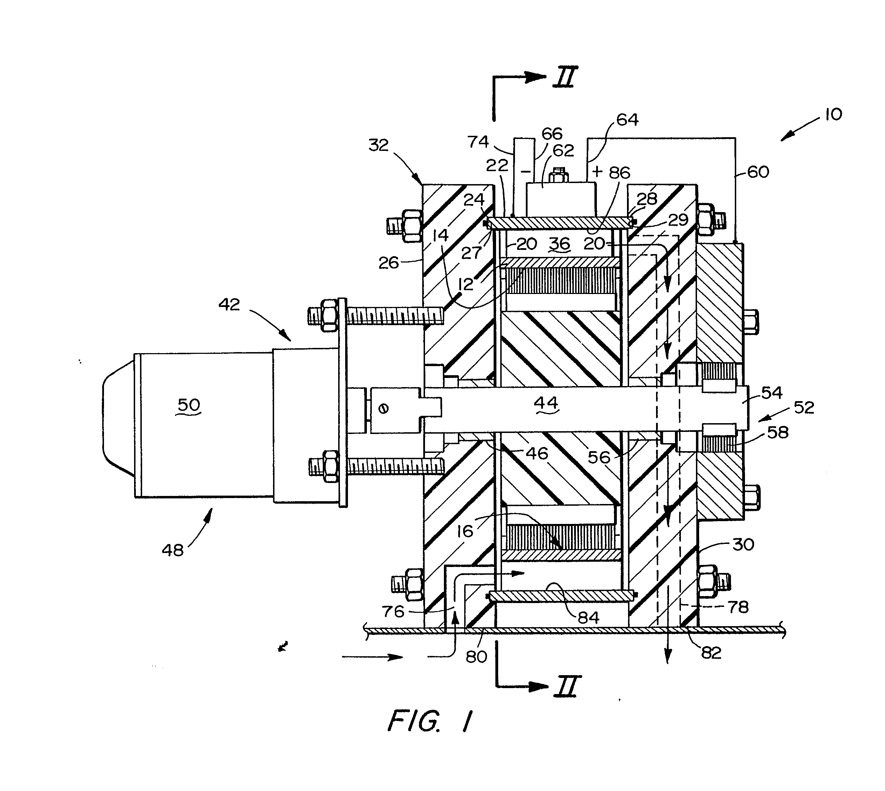

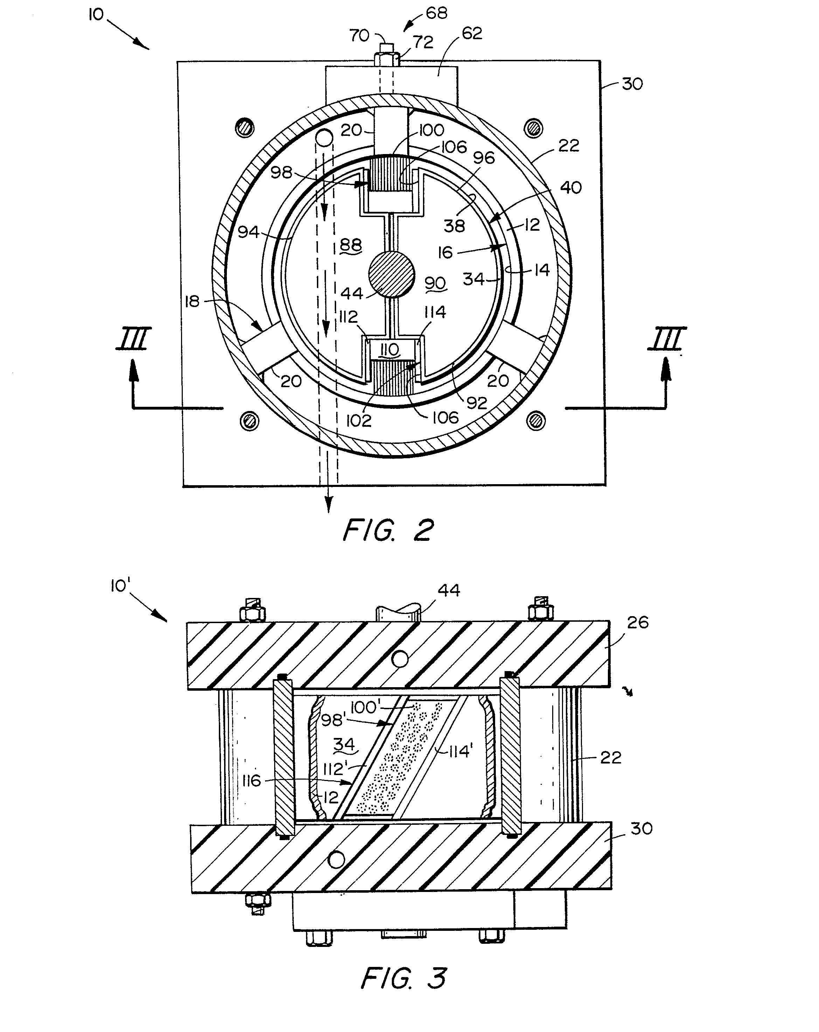

Referring to the drawings, Figures 1 and 2 show an electrolysis cell 10 which includes an outer electrode 12 having an in-facing surface 14 which defines a first cylindrical surface 16. The outer electrode 12 is attached, via a support structure 18 (see Figure 2) constituted by a plurality of bars 20, a support tube 22 which surrounds the outer electrode. One end 24 of the support tube 22 is closed by a first end wall 26, and the other end 28 of the support tube 22 is closed by a second end wall 30. An annular channel 27 is formed in the end wall 26, and an annular channel 29 is formed in the end wall 30. The annular channels 27 and 29 respectively serve to receive the first end 24 and the second end 28 of the support tube 22. The end walls 26 and 30 are generally made of insulating material, whereby the support tube 22, together with the end walls 26 and 30, comprise means 32 for supporting the outer electrode 12 and an inner electrode 34 in electrically insulating relation relative to one another, and for defining a cell cavity 36 surrounding the electrodes 12 and 34.

The inner electrode 34 is coaxial with the outer electrode 12 and has an out-facing surface 38 which defines a second cylindrical surface 40. The second cylindrical surface 40 lies radially inwardly of the first cylindrical surface 16.

Means 42 are provided for relatively rotating the inner and outer electrodes 12 and 34. The means 42 comprises an electrically conductive shaft 44 which passes through the end wall 26. The shaft is rotatably supported in, and sealed with respect to, the end wall 20 by means of bearings 46. The shaft 44 is drivably connected to the inner electrode 34 axially thereof. Means 48, constituted by a conventional motor 50, outside the cell 10 rotatably drive the shaft 44, the motor being bolted to the end wall 26.

Means 52 are provided for electrically connecting the shaft 44 to the out-facing surface 38 of the inner electrode 34. The connecting means 52 comprises an end 54 of the shaft 44, the end 54 extending through sealing bearings 56 to a position beyond the end wall 30, and a conventional brush conductor 58 which is connected via a line 60 to a diode 62. The diode 62 is connected to an alternating current power source, and rectifies the alternating current to provide both a positive output 64 and a negative output 66. The bearings 46 and 56 are so located that both the shaft 44 and the inner electrode 34

0012618

are accurately positioned relative to the outer electrode 12. The outer electrode 12 is itself held in place by the channels 27 and 29 holding the ends 24 and 28 of the support tube 22 in place. Thus, assembly and disassembly of the parts of the cell 10 is readily obtained with full alignment of the inner electrode 12 relative to the outer electrode 34.

The diode 62 is mounted directly on the support tube 22. Cooling of the direct current source 62 thus occurs, with the heat therefrom being carried off by the salt solution flowing through the electrolysis cell 10. Means 68, constituted by a simple bolt 70 and a nut 72, serves for mounting the diode 62 on the support tube 22. A line 74 connects the negative output 66 to the support tube 22, which is generally of metallic construction, whereby the outer electrode 12 is electrically connected, via the bars 20, to the negative output 66. Thus, the outer electrode 12 is the cathode, and the inner electrode 34 is the anode.

Referring particularly to Figure 1, it will be noted that the end wall 26 includes an input fluid flow path 76, and the end wall 30 includes an output fluid flow path 78, which flow paths communicate with the cell cavity 36. It will be further noted that the end walls 26 and 30 have flat bases 80 and 82 respectively, which serve as means for positioning the common axis of the electrodes 12 and 34 and of the shaft 44, substantially horizontal. The input fluid flow path 76 thus communicates with the cavity 36 adjacent to the base 84 thereof, and the output flow path 78 communicates with the cavity 36 adjacent to the top 86 thereof. This ensures that there will be a forced flow of the saline solution within the cavity 36 between the outer electrode 12 and the inner electrode 34.

The inner electrode 34 is constituted by a pair of electrically insulative hemi-cylinders 88 and 90 (see Figure 2) mounted on the shaft 44. A conductive foil 92 covers out-facing surfaces 94 and 96 of the hemi-cylinders 88 and 90 and is in electrically conductive contact with the shaft 44.

The cell 10 is provided with an abrading structure 98 which has an abrasive portion 100 (see Figure 2). Means 102 is provided for mounting the abrading structure 98 to the inner electrode 34, with the abrasive portion 100 in abrasive contact with the outer electrode 12. Alternatively, the abrading structure 98 could be mounted on the outer electrode 12 with the abrasive portion 100 in contact with the inner electrode 84. Means 104 are also provided for electrically insulating the abrading structure 98 from the electrode 34. The abrading structure mounting means 102, (see Figure 2) comprises a pair of axially-extending channels 106 which proceed radially inwardly into the inner electrode 34 from the out-facing surface 38 thereof. The abrading structure insulating means 104 comprises an insulating structure constituted by an insulating bar 110 and a pair of insulating strips 112 and 114, which together completely insulate the abrasive portion 100 from the inner electrode 34. It will be noted that this structure has particular advantages, in that the abrading structure 98 can be very quickly and easily replaced if needed. It will further be noted that the abrading structure 98 preferably extends axially substantially the entire length of the electrodes 12 and 34 to provide full abrasive action on the cathode. Further, assembly and disassembly requires no critical alignment.

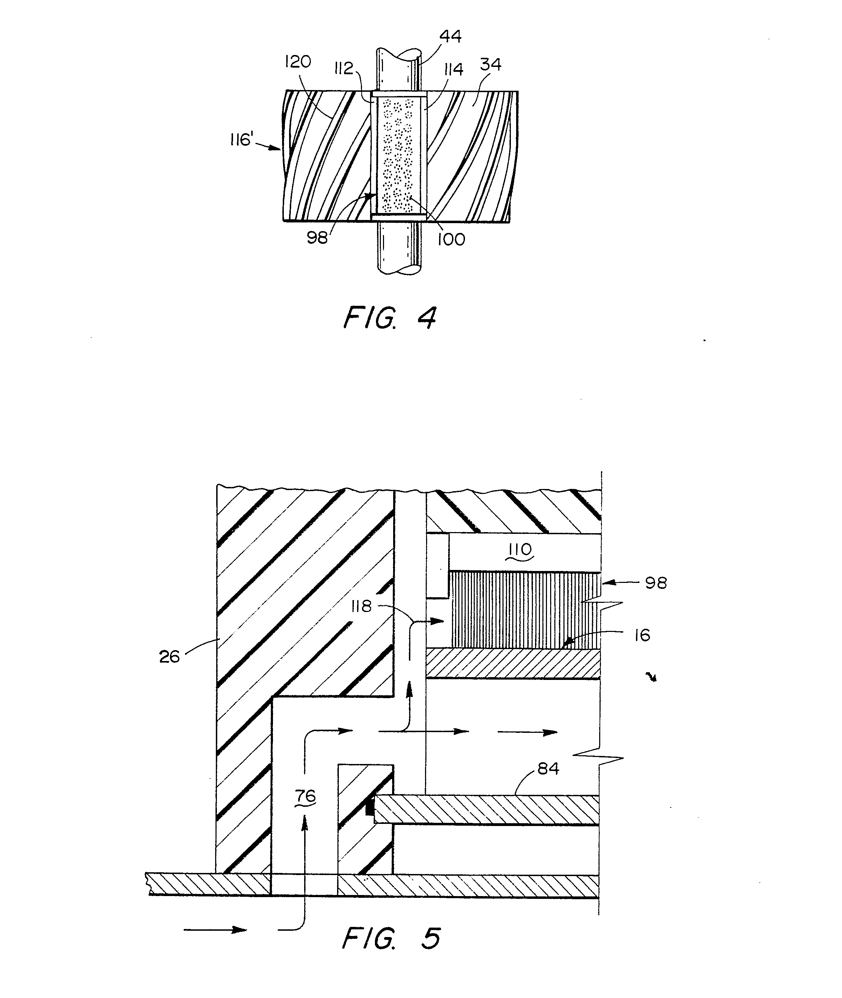

Referring now to Figure 3, a modified abrasive portion 100 of the abrading structure 98 is positioned at an angle to the common axis of the electrodes 12 and 34 and of the shaft 44. In this manner, the abrading structure 98 also serves as a means 116 for motivating fluid in the cavity 36 to flow axially relative to the electrodes 12 and 34, and, in the space between the electrodes 12 and 34, in the direction shown by an arrow 118 in Figure 5.

Referring now to Figure 4, there is illustrated an alternative means 116' for motivating fluid in the cavity 36 to flow axially relative to the electrodes 12 and 34 and in the space between the electrodes. This fluid motivating means 116' is constituted by a plurality of flutes 120 formed in the outer surface of the inner electrode 34. The flutes 120 are angled, relative to the common axis of the electrodes 12 and 34, and of the shaft 44. The flutes 120 may be helical, or set simply at any desired angle to said common axis. In this manner, the flutes 120 serve to propel fluid axially between the electrodes 12 and 34.

The electrolysis cell 10 described above is easy to assemble and disassemble. Moreover, the formation of scale on its cathode is prevented, whilst the entire facing surfaces of the two electrodes 12 and 34 are utilised, whereby more efficient production of chlorine can be attained. The entire apparatus is relatively simple and rugged, thus making it particularly adaptable for use with swimming pools and the like.

0012618

CLAIMS

1.      An electrolysis cell (10) comprising an outer electrode (12) having an in-facing surface (14) which defines a first cylindrical surface (16), an inner coaxial electrode (34) having an out-facing surface (38) which defines a second cylindrical surface (40), the second cylindrical surface being radially inward of the first cylindrical surface, the outer and inner electrodes being longitudinally co-extensive for at least a substantial portion thereof, means (42) for relatively rotating the inner and outer electrodes, an abrading structure (98) having an abrasive portion (100), means (102) for mounting the abrading structure to one of the electrodes with the abrasive portion thereof in abrasive contact with the other electrode, means (104) for electrically insulating the abrasive portion from said one electrode, and means (32) for supporting the electrodes in electrically insulating relation relative to one another and for defining a cell cavity (36) surrounding the electrodes.

2.      A cell as claimed in claim 1, wherein the abrading structure (98) extends axially substantially the entire co-extensive portion of the electrodes (12 and 34).

3.      A cell as claimed in claim 1 or claim 2, wherein the abrasive portion (100) is at an angle to the common axis of the electrodes (12 and 34).

4.      A cell as claimed in any one of claims 1 to 3, further comprising means (116 or 116') for mechanically actuating fluid in the cell cavity (36) to flow axially relative to the electrodes (12 and 34) in the space therebetween.

5.      A cell as claimed in claim 1, wherein the means (32) for supporting the electrodes (12 and 34) and for defining the cell cavity (36) comprises a support tube (22) surrounding the outer electrode (12), a support structure (18) extending from the support tube into supporting contact with the outer electrode, a first end wall (26) closing one end of the support tube, and a second end wall (30) closing the other end of the support tube.

6.      A cell as claimed in claim 5, wherein the relatively rotating means (42) comprises an electrically conductive shaft (44) passing through one of the end walls (26) in sealing rotatable relation thereto and being connected to the inner electrode (34) axially thereof to cause rotation thereof, means (48) external of the end walls for rotatably driving said shaft, and means (52) conductively connecting said shaft to the out-facing surface (38) of the inner electrode.

7.      A cell as claimed in claim 6, further comprising a source of direct current (62) having both a positive output (64) and a negative output (66), means (58, 60) for electrically connecting one of said outputs to said shaft, and means (22, 74) for electrically connecting the other said outputs to the outer electrode (12).

8.      A cell as claimed in any one of claim 5 to 7, wherein at least one of the end walls (26 and 30) is made of an electrically insulating material.

9.      A cell as claimed in any one of claims 5 to 8, wherein the end walls (26 and 30) are provided respectively with an input fluid flow path (76) and an output fluid flow path (78) therethrough, the flow paths communicating with the cell cavity (36).

10.     A cell as claimed in claim 9, wherein the end walls (26 and 30) include means for positioning the common axis of the electrodes (12 and 34) substantially horizontal, the input fluid flow path (76) communicating with the cell cavity (36) adjacent to the base thereof, and the output fluid flow path (78) communicating with the cell cavity adjacent to the top thereof.

11.     A cell as claimed in any one of claims 7 to 10, wherein the support tube (22) is heat conductive, and includes means for mounting the direct current source (62) for cooling the direct current source.

12.     A cell as claimed in any one of claims 6 to 11, wherein the inner electrode (34) is constituted by a pair of electrically insulating hemi-cylinders (88 and 90)

-4-                    0012618

mounted on said shaft (44) a conductive foil (92) covering the out-facing surfaces (94 and 96) of the hemi-cylinders and in electrically conductive contact with said shaft.

13.      A cell as claimed in any one of claims 1 to 12, wherein the abrading structure mounting means (102) comprises at least one axially extending channel (106) proceeding radially inwardly into the inner electrode (34) from the out-facing surface (38) thereof, and the abrasive portion insulating means (104) comprises an insulating structure (110, 112 and 114) within the channel(s).

FIG. I

0012618

FIG. 2

FIG. 3

FIG. 4

FIG. 5